# EUROPEAN PATENT SPECIFICATION

(11) **EP 3 169 058 B1**
(45) Date of publication and mention of the grant of the patent: **06.11.2019**
(21) Application number: 16167335.5
(22) Date of filing: 27.04.2016
(51) Int. Cl.: H04N 5/655, H04N 5/44, H04N 21/431, H04N 21/485, F16M 11/10, F16M 11/18, F16M 11/20, G06F 3/0489

(54) **DISPLAY APPARATUS AND CONTROL METHOD THEREOF**
ANZEIGEVORRICHTUNG UND ZUGEHÖRIGES STEUERUNGSVERFAHREN
APPAREIL D'AFFICHAGE ET SON PROCÉDÉ DE COMMANDE

(30) Priority: 10.11.2015 KR 20150157541
(43) Date of publication of application: 17.05.2017
(73) Proprietor: Samsung Electronics Co., Ltd., Gyeonggi-do 16677 (KR)
(72) Inventor: SHIM, A-hyeon, Gyeonggi-do (KR); PARK, Han-sol, Seoul (KR); SEO, Jang-won, Seoul (KR)
(74) Representative: Appleyard Lees IP LLP

(56) References cited:
- WO-A1-2014/115937
- JP-A- 2005 109 626
- JP-A- 2009 080 186
- JP-A- 2013 046 297
- US-A1- 2004 051 742
- US-A1- 2005 088 410
- US-A1- 2014 191 943

## Description

### BACKGROUND

### Field

Apparatuses and methods consistent with exemplary embodiments relate to a display apparatus and a control method thereof, and more particularly, to a display apparatus which includes a display that rotates, and a control method thereof.

### Description of the Related Art

The development of electronic technologies has enabled various types of electronic apparatuses to be used in various fields. In particular, a display apparatus having swivel and tilt functions has been developed.

However, although a display apparatus supports swivel and tilt functions, a user may rotate a display of the display apparatus. Alternatively, even if the display apparatus includes a motor configured to remotely manipulate the swivel and tilt functions, a direction key button is simply used to use the swivel and tilt functions.

Therefore, there is a need for a method of providing a user with an intuitive user experience that relates to the use of swivel and tilt functions.

JP 2013 046297 A discloses a three-dimensional video display device and tilt control method. WO 2014/115937A1 discloses a display apparatus that is capable of improving user convenience.

### SUMMARY

Exemplary embodiments overcome the above disadvantages and other disadvantages not described above. Further, the present inventive concept is not required to overcome the disadvantages described above, and an exemplary embodiment may not overcome any of the problems described above.

One or more exemplary embodiments provides a display apparatus which includes a display that rotates based on a display location of an object, and a control method thereof.

According to the invention, there is provided a display apparatus according to claim 1 and a method according to claim 9.

According to an aspect of one or more exemplary embodiments, a display apparatus includes a display configured to display an object, a motor configured to cause the display to rotate, a communicator configured to communicate with an input device that controls a movement state of the object, and a processor configured to, in response to the object being located in a preset area of the display, control a driving state of the motor so as to cause the display to rotate in a direction that corresponds to the preset area.

In response to the object being located in an edge area of the display, the processor may be further configured to control to cause the display to rotate such that the edge area rotates in a back side direction of the display apparatus.

In response to the object being located in an edge area of the display, the processor may be further configured to control to cause the display to rotate such that the edge area rotates in a front side direction of the display apparatus.

The processor is further configured to initialize a driving of the motor in response to the object being located in an area located at a distance which is greater than or equal to a preset first distance and shorter than a preset second distance from an edge area of the display, to control to cause the display to rotate at a speed which is lower than a preset speed in response to the object being located in an area located at a distance which is shorter than the first distance and located outside the edge area, and to control to cause the display to rotate at the preset speed in response to the object being located in the edge area.

In response to the display rotating in a direction that corresponds to an edge area of the display in response to the object being located in the edge area of the display, the processor may be further configured to modify a shape of the object so as to provide a visual feedback associated with the rotation.

The visual feedback associated with the rotation may be a visual feedback that relates to performing a pulling or pushing interaction in the edge area.

The processor may be further configured to provide a first visual feedback that indicates a rotation direction of the display in a first edge area and a second edge area which is adjacent to the first edge area in response to the display rotating in a direction that corresponds to the first edge area in response to the object being located in the first edge area of the display, and to provide a second visual feedback that indicates an impossibility of a rotating of the display in the first edge area in response to a complete rotation of the display.

In response to a preset control signal being received from the input device, the processor may be further configured to cause the display to rotate to a preset default location.

In response to a signal being received according to a pressing of a preset button of the input device and a signal that corresponds to a motion of the input device being received, the processor may be further configured to move the object in correspondence with the motion of the input device.

The motor may include at least one from among a first motor configured to swivel the display in leftward and rightward directions and a second motor configured to tilt the display in upward and downward directions.

According to another aspect of one or more exemplary embodiments, a method for controlling a display apparatus includes: displaying an object on a display of the display apparatus, receiving, from an input device, a control command that relates to controlling a movement state of the object, and in response to the object being located in a preset area of the display, controlling a driving state of a motor so as to cause the display to rotate in a direction that corresponds to the preset area.

The controlling may include controlling a rotation of the display by causing an edge area of the display to rotate in a back side direction of the display apparatus in response to the object being located in the edge area of the display.

The controlling may include controlling a rotation of the display by causing an edge area of the display to rotate in a front side direction of the display apparatus in response to the object being located in the edge area of the display.

The controlling includes, in response to the object being located in an area located at a distance which is than or equal to a preset first distance and shorter than a preset second distance from an edge area of the display, initializing a driving of the motor, in response to the object being located in an area located at a distance which is shorter than the first distance and located outside the edge area, causing the display to rotate at a speed which is lower than a preset speed, and in response to the object being located in the edge area, causing the display to rotate at the preset speed.

The method may further include, in response to the display rotating in a direction that corresponds to an edge area of the display in response to the object being located in the edge area of the display, modifying a shape of the object so as to provide a visual feedback associated with the rotation.

The visual feedback associated with the rotation may be a visual feedback that relates to performing a pulling or pushing interaction in the edge area.

The method may further include, in response to the display rotating a direction that corresponds to a first edge area of the display in response to the object being located in the first edge area of the display, providing a first visual feedback that indicates a rotation direction of the display in the first edge area and in a second edge area which is adjacent to the first edge area, and in response to a complete rotation of the display, providing a second visual feedback that indicates an impossibility of a rotation of the display in the first edge area.

The method may further include, in response to a preset control signal being received from the input device, causing the display to rotate to a preset default location.

The controlling may include, in response to a signal being received according to a pressing of a preset button of the input device and a signal that corresponds to a motion of the input device being received, moving the object in correspondence with the motion of the input device.

The motor may include at least one from among a first motor configured to swivel the display in leftward and rightward directions and a second motor configured to tilt the display in upward and downward directions.

According to various exemplary embodiments as described above, a display apparatus may provide a user interaction that enables a user to feel as though the user directly pulls or pushes an area where an object is located, in order to rotate a display.

Additional and/or other aspects and advantages of the exemplary embodiments will be set forth in part in the description which follows and, in part, will be apparent from the description, or may be learned by practice of the exemplary embodiments.

### BRIEF DESCRIPTION OF THE DRAWINGS

The above and/or other aspects will be more apparent by describing certain exemplary embodiments with reference to the accompanying drawings, in which:
FIG. 1 illustrates a display rotating system, according to an exemplary embodiment;
FIGS. 2A and 2B are block diagrams of a configuration of a display apparatus, according to an exemplary embodiment;
FIGS. 3A and 3B illustrate a rotation direction of a display, according to an exemplary embodiment;
FIG. 4 illustrates an operation that is performed according to a location of an object, according to an exemplary embodiment;
FIG. 5 illustrates a method for providing a visual feedback, according to an exemplary embodiment;
FIG. 6 illustrates a method for providing a visual feedback, according to another exemplary embodiment;
FIGS. 7A and 7B illustrate a rotation limit point of a display and an operation performed according to the rotation limit point, according to an exemplary embodiment;
FIG. 8 illustrates an operation of rotating a display to a default location, according to an exemplary embodiment;
FIG. 9 illustrates a method for rotating a display, according to an exemplary embodiment; and
FIG. 10 is a flowchart of a method for controlling a display apparatus, according to an exemplary embodiment.

### DETAILED DESCRIPTION

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions. Further, well-known functions or constructions are not described in detail since they would obscure the present disclosure with unnecessary detail.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Thus, it is apparent that the exemplary embodiments can be carried out without those specifically defined matters. Further, well-known functions or constructions are not described in detail since they would obscure the present disclosure with unnecessary detail.

Hereinafter, while exemplary embodiments are capable of various modifications and alternative forms, exemplary embodiments thereof are shown by way of example in the drawings and will herein be described in detail. It may be understood, however, that there is no intent to limit exemplary embodiments to the particular forms disclosed, but on the contrary, exemplary embodiments are to cover all modifications, equivalents, and alternatives falling within the scope of the present inventive concept. Like numbers refer to like elements throughout the description of the figures.

Although the terms, 'first', 'second', etc. may be used herein to describe various elements, these elements should not be limited by these terms. These terms are only used to distinguish one element from another. For example, a first element could be termed a second element, and, similarly, a second element could be termed a first element, without departing from the scope of exemplary embodiments.

It will be understood that when an element (e.g., a first element) is referred to as being operatively or communicatively coupled with/to or connected to a second element, the first element may be connected to the second element directly or through another element (e.g., a third element). In contrast, when an element (e.g., a first element) is referred to as being "directly coupled with/to" or "directly connected to" a second element, there are no intervening element (e.g., a third element) between the first element and the second element.

The terminology used herein is for the purpose of describing particular exemplary embodiments only and is not intended to be limiting of exemplary embodiments. As used herein, the singular forms are intended to include the plural forms as well, unless the context clearly indicates otherwise. Unless otherwise defined, all terms (including technical and scientific terms) used herein have the same meaning as commonly understood by one of ordinary skill in the art to which exemplary embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. The terminology defined herein may not be interpreted as excluding exemplary embodiments of the present disclosure.

Hereinafter, various exemplary embodiments will be described in detail with reference to the attached drawings.

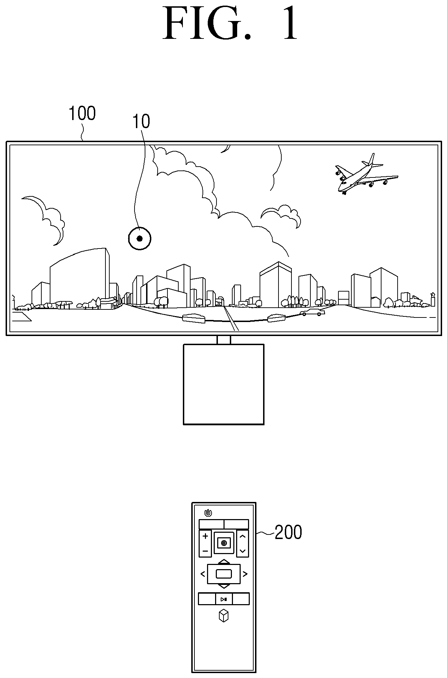

FIG. 1 illustrates a display rotating system, according to an exemplary embodiment. As shown in FIG. 1, the display rotating system includes a display apparatus 100 and an input device 200.

The display apparatus 100 may be realized as any of various types of apparatuses having display functions, such as a monitor, a television (TV), a kiosk personal computer (PC), and/or any other suitable type of display apparatus. In particular, the display apparatus 100 may be realized as a stationary apparatus.

The display apparatus 100 may perform communications with the input device 200. The display apparatus 100 may receive a control command for controlling the display apparatus 100 from the input device 200.

The display apparatus 100 may display an object 10. The display apparatus 100 may overlay and display the object 10 on a displayed content.

If the control command is not received from the input device 200 for a preset time, the display apparatus 100 may discontinue the displaying of the object 10. If the control command is received from the input device 200 when the object 10 is not currently being displayed, the display apparatus 100 may commence or resume a displaying of the object 10. The display apparatus 100 may change and display a location of the object 10 according to the control command received from the input device 200.

Alternatively, if a finger touches a pointing button of the input device 200, the display apparatus 100 may display the object 10. When the finger touches the pointing button of the input device 200, the display apparatus 100 may change and display a location of the object 10 according to a movement operation of the input device 200.

The display apparatus 100 may rotate a display of the display apparatus 100 according to a location of the object 10. The display apparatus 100 may control a driving state of a motor unit (also referred to herein as a "motor") of the display apparatus 100 in order to cause the display to rotate.

The display apparatus 100 may rotate the display in upward, downward, leftward, and rightward directions. This will be described in detail below.

The input device 200 may be realized as any of various types of devices that may be configured to transmit a control command, such as, for example, a remote control device, etc. For example, the input device 200 may be a device that may be configured to operate in conjunction with the display apparatus 100, such as any of a remote controller used for the display apparatus 100, an integrated remote controller, a smartphone, or the like.

The input device 200 may wirelessly transmit a control command to the display apparatus 100. However, the input device 200 is not limited thereto, and thus may be connected to the display apparatus 100 by wire in order to transmit a control command.

The input device 200 may transmit the control command to the display apparatus 100. For example, the input device 200 may transmit the control command so as to change and display a location of the object 10 displayed on the display apparatus 100.

The input device 200 may include any one or more of a gravity sensor, an acceleration sensor, a gyro sensor, and/or any other suitable type of sensor. The input device 200 may determine that a direction of motion of the input device 200 is changed, by using a plurality of sensors. The input device 200 may generate a signal that corresponds to a movement direction change, and may transmit the signal to the display apparatus 100. Further, the display apparatus 100 may change a display location of the object 10 according to the movement direction change of the input device 200.

The input device 200 may include any one or more of a direction key button, a touch pad, and/or any other suitable modality for facilitating user input. The input device 200 may generate various types of control commands by using the direction key button, the touch pad, and other buttons.

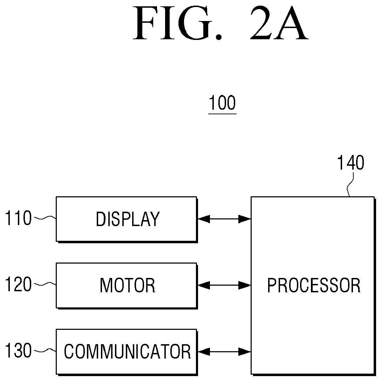

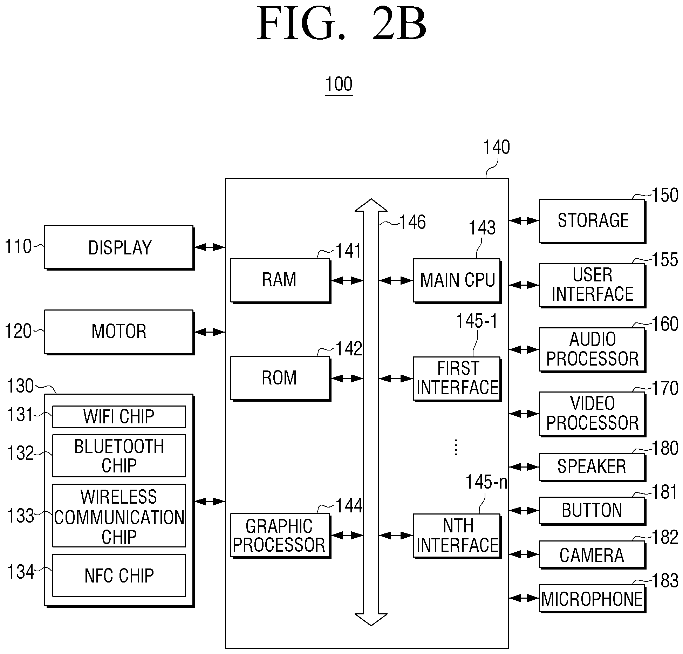

FIGS. 2A and 2B are block diagrams of a configuration of a display apparatus 100, according to an exemplary embodiment.

As shown in FIG. 2A, the display apparatus 100 includes a display 110, a motor unit (also referred to herein as a "motor") 120, a communicator 130, and a processor 140.

The display 110 may display the object 10 under control of the processor 140. For example, the display 110 may display only the object 10, or may overlay and display the object 10 on another displayed content.

The display 110 may also display the object 10 which may be classified according to any of various types. For example, the display 110 may display the object 10 having a circular shape or the like, and if the object 10 points a particular location, a shape of the object 10 is not limited.

Further, the display 110 may be realized as any of a liquid crystal display panel (LCDP), an organic light-emitting diode (OLED), or the like, but is not limited thereto. The display 110 may also be realized as any of a flexible display, a transparent display, or the like.

The motor unit 120 may rotate the display 110 under control of the processor 140. For example, the motor unit 120 may rotate the display 110 in one or two of upward, downward, leftward, and rightward directions.

The motor unit 120 may include at least one selected from a first motor that swivels the display 110 in leftward and rightward directions and a second motor that tilts in upward and downward directions. The swivel refers to an operation of rotating the display 110 in the leftward and rightward directions, i.e., rotation about a vertical axis, and the tilt refers to an operation of rotating the display 110 in the upward and downward directions, i.e., rotation about a horizontal axis.

The motor unit 120 may operate in any of various operation states under control of the processor 140. For example, a rotation speed of the motor unit 120 may vary based on a location of the object 10 displayed on the display 110. Alternatively, a rotation of the motor unit 120 may be determined based on a rotation angle of the display 110.

The communicator 130 may perform communications with the input device 200 that controls a movement state of the object 10. In detail, the communicator 130 may receive a control command from the input device 200, or may transmit information about an operation state to the input device 200 based on the control command.

The communicator 130 may perform unidirectional communications or bidirectional communications with the input device 200. If the communicator 130 performs the unidirectional communications, the communicator 130 may receive a signal from the input device 200. If the communicator 130 performs the bidirectional communications, the communicator 130 may receive a signal from the input device 200 and/or may transmit a signal to the input device 200.

The processor 140 controls an overall operation of the display apparatus 100.

The processor 140 may change a display location of the object 10 based on the control command received from the input device 200. If the object 10 is located in a preset area of the display 110, the processor 140 may control a driving state of the motor unit 120 so as to cause the display 110 to rotate in a direction that corresponds to the preset area.

In particular, if the object 10 is located in an edge area of the display 110, the processor 140 may control the rotation of the display such that the edge area is caused to rotate in a back side direction of the display apparatus 100. For example, if the object 10 is located in an upper edge area of the display 110, the processor 140 may control the upper edge area to rotate in a back side direction of the display apparatus 100. In this aspect, a front side direction is a direction that orthogonally emerges from a surface of the display 110, and the back side direction is a direction that orthogonally projects into the surface of the display 110. Further, an "edge area" may refer to an area that is located within a preset distance from an edge of the display 110. This will be described in detail below.

Alternatively, if the object 10 is located in an edge area of the display 110, the processor 140 may control the rotation of the display such that the edge area is caused to rotate in the front side direction of the display apparatus 100. The processor 140 may determine a rotation direction of the edge area, where the object 10 is located, based on the control command received from the input device 200.

For example, if a control command is received when a particular button of the input device 200 is not manipulated to be pressed, the processor 140 may control an edge area, within which the object 10 is located, to rotate in the back side direction of the display apparatus 100. Alternatively, if the control command is received when the particular button of the input device 200 is manipulated to be pressed, the processor 140 may control the edge area, within which the object 10 is located, to rotate in the front side direction of the display apparatus 100.

If the object 10 is located in an area located at a distance which is greater than or equal to a preset first distance and shorter than a preset second distance from an edge area of the display 110, the processor 140 may initialize a driving of the motor unit 120. If the object 10 is located in an area located at a distance which is shorter than the first distance and located outside the edge area, the processor 140 may control the display 110 to rotate at a speed which is lower than a preset speed. If the object 10 is located in the edge area, the processor 140 may control the display 110 to rotate at the preset speed.

In particular, the initializing of the driving of the motor unit 120 indicates that a current flows in the motor unit 120 to preheat the motor unit 120 or the display 110 does not rotate due to a non-driving state of the motor unit 120. If the driving of the motor unit 120 is initialized, a motor operation delay time may be reduced more than when the driving of the motor unit 120 is not driven.

If the object 10 is located in an edge area of the display 110 so as to enable the display 110 to rotate in a direction that corresponds to the edge area, the processor 140 may modify a shape of the object 10 so as to provide a visual feedback associated with the rotation.

In particular, the visual feedback associated with the rotation may be a visual feedback that relates to performing a pulling or pushing interaction in an edge area. For example, the visual feedback may be a visual feedback that provides a user experience that enables a user to feel as if the user is pushing or pulling the display 110.

If the object 10 is located in a first edge area of the display 110 so as to enable the display 110 to rotate in a direction that corresponds to the first edge area, the processor 140 may provide a visual feedback that indicates a rotation direction of the display 110 in the first edge area and in a second edge area that is adjacent to the first edge area. If the rotation of the display 110 is completed, the processor 140 may provide a visual feedback that indicates an impossibility of the rotation of the display 110 in the first edge area.

The display 110 may rotate within a particular angle in consideration of a physical limitation. In particular, upward and downward rotations of the display 110 may be made within a particular angle in terms of hardware. If the rotation of the display 110 reaches a limit point, and thus the display 110 does not rotate in the same direction any further, the processor 140 may provide a visual feedback that indicates an impossibility of continuing the rotation of the display 110.

However, the rotation of the display 110 is not limited thereto, and thus the display 110 may rotate at 360° based on a structure of the display apparatus 100. In this case, the processor 140 may not provide a visual feedback that indicates an impossibility of continuing the rotation of the display 110.

If a preset control signal is received from the input device 200, the processor 140 may rotate the display 110 to a preset default location. The preset default location may correspond to a location set by a manufacturer. However, the preset default location is not limited thereto and thus may be set by the user.

If a signal is received based on a manipulation of pressing a preset button of the input device 200 and a signal that corresponds to a movement of the input device 200 is received, the processor 140 may move the object 10 so as to enable the object 10 to correspond to the movement of the input device 200.

FIG. 2B is a detailed configuration of the display apparatus 100, according to an exemplary embodiment. Referring to FIG. 2B, the display apparatus 100 includes a display 110, a motor unit 120, a communicator 130, a processor 140, a storage 150, a user interface 155, an audio processor 160, a video processor 170, a speaker 180, a button 181, a camera 182, and a microphone 183. Detailed descriptions of the same elements of FIG. 2B as those of the elements of FIG. 2A are omitted.

The processor 140 controls an overall operation of the display apparatus 100 by using various types of programs stored in the storage 150.

In detail, the processor 140 includes a random access memory (RAM) 141, a read only memory (ROM) 142, a main central processing unit (CPU) 143, a graphic processor 144, first through n^{th} interfaces 145-1 through 145-n, and a bus 146.

The RAM 141, the ROM 142, the main CPU 143, the graphic processor 144, the first through n^{th} interfaces 145-1 through 145-n, and any other component portions of the processor 140 may be connected to one another via the bus 146.

The first through n^{th} interfaces 145-1 through 145-n are connected to various types of elements as described above. One of the first through n^{th} interfaces 145-1 through 145-n may be a network interface that is connected to an external apparatus via a network.

The main CPU 143 accesses the storage 150 to perform booting by using an operating system (O/S) stored in the storage 150. The main CPU 143 also performs various types of operations by using various types of programs, routines, and/or other instruction sets stored in the storage 150.

The ROM 142 stores a command set and/or other type of instruction set for booting a system. If power is supplied as a result of an input of a turn-on command, the main CPU 143 copies the O/S stored in the storage 150 into the RAM 141 according to a command stored in the ROM 142 and executes the O/S in order to boot up the system. If the system is completely booted, the main CPU 143 copies various types of application programs stored in the storage 150 into the RAM 141 and executes the application programs copied into the RAM 141 in order to perform various types of operations.

The graphic processor 144 generates a screen which may include any of various types of objects, such as an icon, an image, a text, and/or any other suitable type of object, by using an operator (not shown) and a renderer (not shown). The operator calculates attribute values, such as coordinate values at which objects will be displayed according to a layout of the screen, shapes, sizes, colors, and/or other characteristics of the objects, based on a received control command. The renderer generates a screen that has various types of layouts which include objects based on the attribute values calculated by the operator. The screen generated by the renderer is displayed in a display area of the display 110.

An operation of the processor 140 may be performed by a program stored in the storage 150.

The storage 150 stores various types of data, such as an O/S software module, a driver control module, and/or any other suitable data type for driving the display apparatus 100.

In this case, the processor 140 may determine whether the display 110 rotates, based on information stored in the storage 150.

The communicator 130 is an element that performs communications with various types of external apparatuses according to various types of communication methods. The communicator 130 includes any one or more of a wireless fidelity (WiFi) chip 131, a Bluetooth chip 132, a wireless communication chip 133, a near field communication (NFC) chip 134, and/or any other suitable type of communication chip. The processor 140 performs communications with various types of external apparatuses by using the communicator 130.

The WiFi chip 131 and the Bluetooth chip 132 respectively perform communications according to a WiFi method and a Bluetooth method. If the WiFi chip 131 or the Bluetooth chip 132 is used, various types of connection information, such as a subsystem identification (SSID), a session key, and/or any other suitable type of connection information, may be first transmitted and received, and various types of information may be transmitted and received after effecting a communications connection by using the various types of connection information. The wireless communication chip 133 refers to a chip that performs communications according to various types of communication standards such as IEEE, Zigbee, 3^{rd} Generation (3G), 3^{rd} Generation Partnership Project (3GPP), Long Term Evolution (LTE), and/or any other suitable communication standard. The NFC chip 134 refers to a chip that operates according to an NFC method using a band of 13.56 MHz among various types of radio frequency identification (RFID) frequency bands, such as 135 kHz, 13.56 MHz, 433 MHz, between 860 MHz and 960 MHz, 2.45 GHz, and/or any other suitable frequency band.

The communicator 130 may perform unidirectional communications or bidirectional communications with an electronic device. If the communicator 130 performs unidirectional communications, the communicator 130 may receive a signal from the electronic device. If the communicator 130 performs bidirectional communications, the communicator 130 may receive a signal from the electronic device and transmit a signal to the electronic device.

The user interface 155 receives various types of user interactions. In particular, the user interface 155 may be realized as any of various types according to a realization example of the display apparatus 100. If the display apparatus 100 is realized as a digital TV, the user interface 155 may be realized as a remote control receiver that receives a remote control signal from a remote control device, a camera that senses a user motion, a microphone that receives a user voice, or the like. Further, if the display apparatus 100 is realized as a touch-based electronic device, the user interface 155 may be realized as a touch screen that forms a layer structure with a touch pad. In this case, the user interface 155 may be used in a similar manner as the display 110 described above.

The audio processor 160 is an element that performs processing with respect to audio data. The audio processor 160 may performs various types of processing, such as decoding, amplifying, noise filtering, and/or any other suitable type of audio processing, with respect to the audio data.

The video processor 170 is an element that performs processing with respect to video data. The video processor 170 may perform various types of image processing, such as decoding, scaling, noise filtering, frame rate converting, resolution converting, and/or any other suitable type of video processing, with respect to the video data.

The speaker 180 is an element that outputs various types of audio data, various types of notification sounds, various types of voice messages, and/or any other suitable type of sound or audio processed by the audio processor 160.

The button 181 may include any of various types of buttons such as a mechanical button, a touch pad, a wheel, and/or any other suitable type of button that are formed in arbitrary areas such as a front surface, a side, a back surface, and/or any other suitable portion of an external appearance of a main body of the display apparatus 100.

The camera 182 is an element that captures a still image or a moving image under control of a user. The camera 182 may be realized as a plurality of cameras which include a front camera, a rear camera, and/or any other type of camera configuration.

The microphone 183 is an element that receives a user voice or other sounds and converts the user voice or the other sounds into audio data.

Although not shown in FIG. 2B, according to exemplary embodiments, the display apparatus 100 may further include a universal serial bus (USB) port to which a USB connector may be connected, various types of external input ports to which various types of external terminals, such as a headset, a mouse, a local area network (LAN), and/or any other suitable type of terminal are connected, a Digital Multimedia Broadcasting (DMB) chip that receives and processes a DMB signal, various types of sensors, and/or any other suitable type of component.

Basic elements and various exemplary embodiments will now be described to increase an understanding of the present inventive concept.

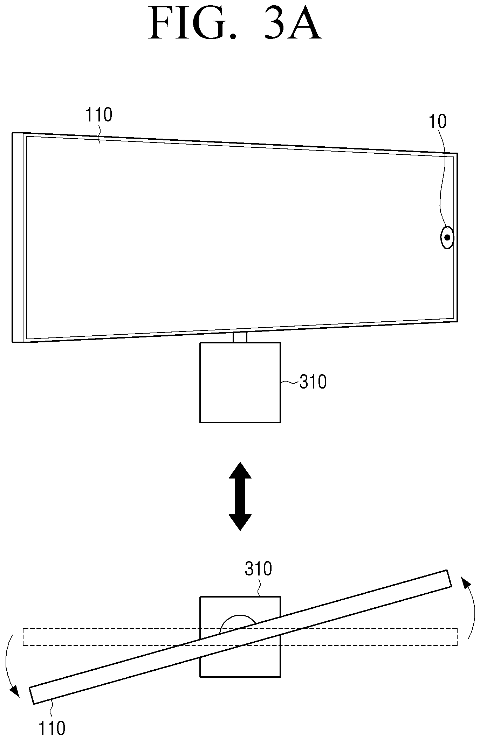

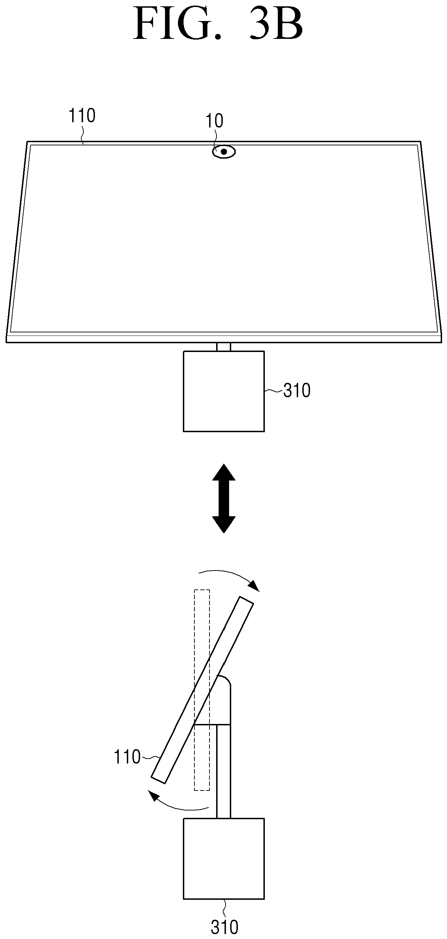

FIGS. 3A and 3B illustrate a rotation direction of a display 110, according to an exemplary embodiment.

As shown in FIG. 3A, the processor 140 may display an object 10 on a right side of the display 110. Although not shown in FIG. 3A, the processor 140 may move and display the object 10 based on a control command received from the input device 200.

If a signal is received according to a user manipulation of pressing a preset button of the input device 200 and a signal that corresponds to a motion of the input device 200 is received, the processor 140 may move the object 10 in correspondence with the motion of the input device 200. However, the processor 140 is not limited thereto, and thus may move the object 10 by using a direction key button, or by any of various other mechanisms.

If the object 10 is located in a preset area of the display 110, the processor 140 may control a driving state of the motor unit 120 so as to cause the display 110 to rotate in a direction that corresponds to the preset area. For example, if the object 10 is located in a right edge area of the display 110, the processor 140 may cause the display 110 to rotate in a rightward direction based on a support unit 310.

A lower drawing of FIG. 3A illustrates the display 110 that rotates in a rightward direction (i.e., a counterclockwise direction) and is seen from a top of the display apparatus 100. The processor 140 may rotate only the display 110 in the rightward direction based on the support unit 310 (i.e., a counterclockwise direction based on an axis of rotation coinciding with the support unit 310).

Alternatively, if the object 10 is located in a left edge area of the display 110, the processor 140 may cause the display 110 to rotate in a leftward direction based on the support unit 310 (i.e. a clockwise direction based on the axis of rotation coinciding with the support unit 310). The rotating of the display 110 in the leftward and rightward directions based on the support unit 310 refers to swiveling.

According to an upper drawing of FIG. 3B, if the object 10 is located in an upper edge area of the display 110, the processor 140 may cause the display 110 to rotate in an upward direction (i.e., a clockwise direction based on a horizontal axis of rotation that coincides with a central portion of the display 110).

The upper drawing of FIG. 3B illustrates the display 110 that rotates in the upward (i.e., clockwise) direction and is seen from a side of the display apparatus 100. The processor 140 may rotate only the display 110 in the upward direction based on the support unit 310.

Alternatively, if the object 10 is located in a lower edge area of the display 110, the processor 140 may cause the display 110 to rotate in a downward (i.e., counterclockwise) direction based on the support unit 310. The rotating of the display 10 in the upward and downward directions based on the support unit 310 refers to tilting.

The motor unit 120 may rotate the display 110 under control of the processor 140. The motor unit 120 may include at least one selected from among a first motor that swivels a display in leftward and rightward directions and a second motor that tilts the display in upward and downward directions. However, the motor unit 120 is not limited thereto, and may rotate the display 110 in the upward, downward, leftward, and rightward directions by using only one motor.

As shown in FIGS. 3A and 3B, if the object 10 is located in an edge area of the display 110, the processor 140 may control the motor 120 so as to cause the edge area to rotate in a back side direction of the display apparatus 100.

However, the exemplary embodiments are not limited thereto, and if the object 10 is located in an edge area of the display 110, the processor 140 may control the motor 120 so as to cause the edge area to rotate in a front side direction of the display apparatus 100.

A rotation direction of the display 110 may be set by a manufacturer or based on a convenience of a user. Alternatively, the rotation direction of the display 110 may be determined based on whether a particular button of the input device 200 is pressed by a user.

As described with reference to FIGS. 3A and 3B, if the object 10 is located in an edge area of the display 110, the display 110 rotates, but the exemplary embodiments are not limited thereto. For example, even if the object 10 is located at a preset distance from an edge area of the display 10, the display 110 may rotate. This will be described below.

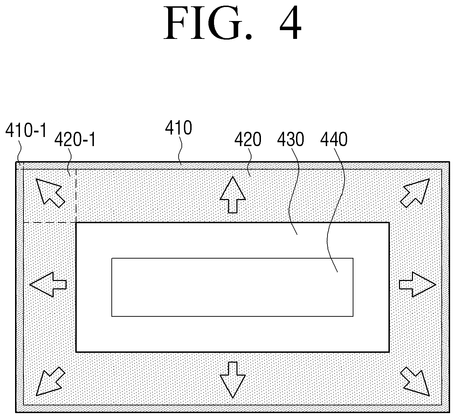

FIG. 4 illustrates an operation that is performed according to a location of the object 10, according to an exemplary embodiment.

As shown in FIG. 4, if the object 10 is located in an edge area 410, the processor 140 may control the display 110 to rotate at a preset speed. In particular, the edge area 410 may be an area within which the object 10 is formed to be adjacent to an edge of the display 110. However, the edge area 410 may be an area where the object 10 is located at a preset distance from the edge of the display 110.

If the object 10 is located in a first area 420 located at a distance which is shorter than a first distance and located outside the edge area 410, the processor 140 may control the display 110 to rotate at a speed which is lower than a preset speed. For example, the processor 140 may control such that a smaller amount of current flows in the motor unit 120 than when the object 10 is located in the edge area 410. This operation may inform a user that the display 110 may rotate.

If the object 10 is located in a second area 430 located at a distance which is greater than or equal to a preset first distance and shorter than a preset second distance from the edge area 410 of the display 110, the processor 140 may initialize a driving of the motor unit 120. For example, the processor 140 may control such that a smaller amount of current flows in the motor unit 120 than when the object 10 is located in an area located at a distance which is shorter than the first distance. This operation may enable an operation delay time of the motor unit 120 to be reduced.

If the object 10 is located in a third area 440 located at a distance which is greater than or equal to a preset second distance from the edge area 410, the processor 140 may control such that no current flows in the motor unit 120.

If the object 10 is located in a partial area 410-1 of the edge area 410 and in a partial area 420-1 of the first area 420, the processor 140 may control the display 110 to rotate in upward and downward directions. In this aspect, the processor 140 may cause the display 110 to rotate in one of upward, downward, leftward, and rightward directions but may cause the display 110 to rotate in two of the upward, downward, leftward, and rightward directions.

For convenience of description, FIG. 4 illustrates only upper and lower areas 410-1 and 420-1 of the edge area 410 and the first area 420. However, the same operation may be performed in a different rotation direction even in upper and right areas.

As described with reference to FIG. 4, a method of the processor 140 that controls the motor unit 120 may vary based on an area within which the object 10 is located. However, the method of the processor 140 is not limited thereto, and thus the area where the object 10 is located may be divided according to another method. For example, the processor 140 may divide an edge area and other areas in order to control a rotation of the display 110.

As shown in FIG. 4, the object 10 may include an additional object for rotating the display 110. For example, the object 10 may be divided into a first object for selecting a displayed content and a second object for rotating the display 110.

In particular, the display apparatus 100 may provide a menu selection function and a rotation function of the display 110 by using the object 10. Even if one object 10 is used and moved to select a menu, a problem of rotating the display 110 may occur.

Therefore, the processor 140 may divide and provide a plurality of functions by using the first and second objects. If a control command is received via the input device 200 when a preset button is not manipulated to be pressed, the processor 140 may display the first object. Alternatively, if the control command is received via the input device 200 when the preset button is manipulated to be pressed, the processor 140 may display the first object.

If the display 110 is divided into an edge area and other areas, the processor 140 may provide a menu selection function and a rotation function of the display 110 by using only one object.

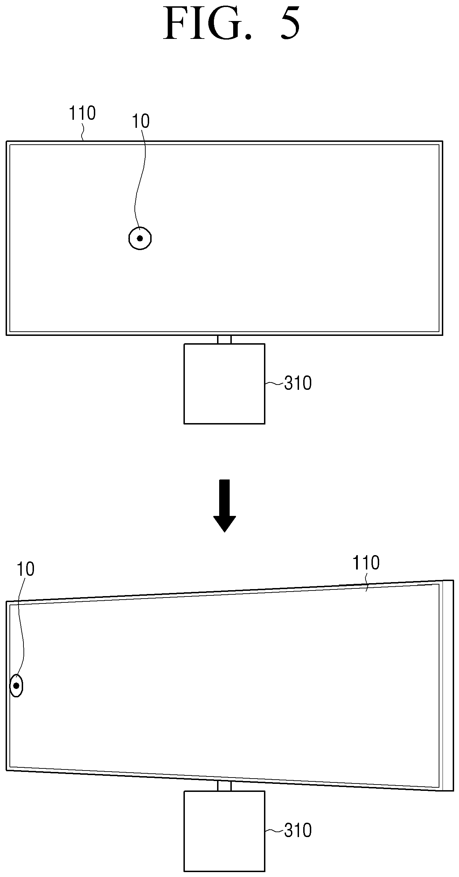

FIG. 5 illustrates a method for providing a visual feedback, according to an exemplary embodiment.

As shown in FIG. 5, if the object 10 is located in an edge area of the display 110, and thus the display 110 rotates in a direction that corresponds to the edge area, the processor 140 may modify a shape of the object 10 so as to provide a visual feedback associated with the rotation.

In particular, the visual feedback associated with the rotation may be a visual feedback that relates to performing a pulling or pushing interaction in an edge area.

For example, if the object 10 is located in an edge area, and thus the display 110 rotates in a back side direction of the display apparatus 100, the processor 140 may modify the object 10 as shown in FIG. 5 so as to enable a user to feel a user experience in performing a pushing interaction. In this case, the object 10 may be a long ellipse in which a vertical axis is longer than a horizontal axis. In this aspect, the processor 140 may modify the object 10 so as to enable the user to feel as if the user presses the object 10.

Alternatively, if the display 110 rotates in a front side direction of the display apparatus 100, the processor 140 may modify the object 10 so as to enable the user to feel a user experience in performing a pulling interaction. In this case, the object 10 may be an ellipse in which a horizontal axis is longer than a vertical axis. In this aspect, the processor 140 may modify the object 10 so as to enable the user to feel as if the user pulls a part of the object 10.

The processor 140 may change a degree of a modification of the object 10 based on a distance of the object 10 from an edge area. For example, the processor 140 may modify the object 10 so as to enable upper and lower portions thereof to become elongated and left-side and right-side portions to become compress as the object 10 becomes closer to an edge area. However, the processor 140 is not limited thereto, and may modify the object 10 so as to enable the left-side and right-side portions to become elongated and the upper and lower portions to become compressed as the object 10 becomes closer to the edge area.

The processor 140 may modify the object 10 only when the display 110 rotates. For example, if the rotation of the display 110 that will be described below is completed, the processor 140 may further modify the modified object 10 into an original shape. Therefore, the user may be informed that the display 110 may not rotate.

As described with reference to FIG. 5, the object 10 is a circle but is not limited thereto. For example, the object 10 may have an arrow shape or a sandglass shape. Even in this case, the processor 140 may modify the object 10 so as to enable upper and lower portions to become elongated and left-side and right-side portions to become compressed.

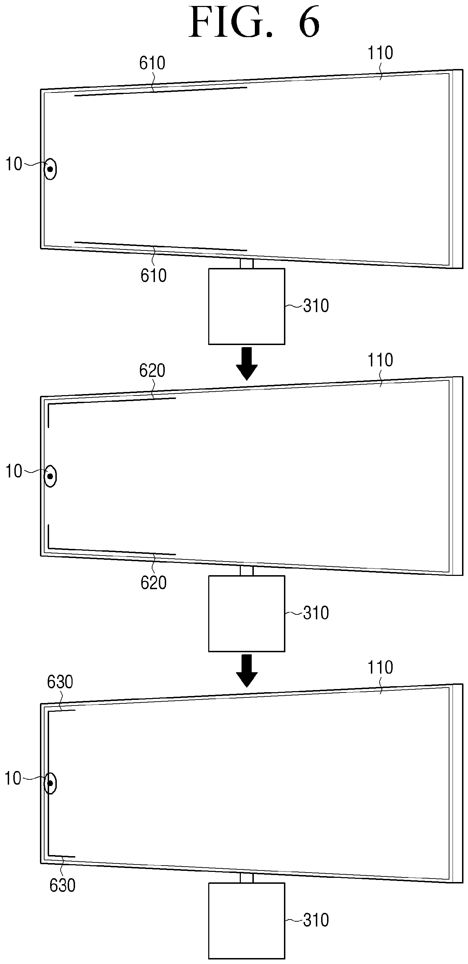

FIG. 6 illustrates a method for providing a visual feedback, according to another exemplary embodiment.

As shown in FIG. 6, if the object 10 is located in a first edge area of the display 110, and thus the display 110 rotates in a direction that corresponds to the first edge area, the processor 140 may provide a visual feedback that indicates a rotation direction of the display 110 in the first edge area and in a second edge area which is adjacent to the first edge area.

For example, if the display 110 rotates in a leftward direction, the processor 140 may provide a first visual feedback 610 as shown in a top drawing of FIG. 6. The processor 140 may consecutively move the first visual feedback 610 to display the first visual feedback 610 as shown in middle and bottom drawings of FIG. 6. In particular, the processor 140 may display a visual feedback so as to enable the visual feedback to indicate a rotation direction of the display 110.

The processor 140 may repeatedly display a visual feedback that indicates a rotation direction of the display 110 while the display 110 rotates. For example, if the display 110 is rotating even after sequentially displaying the first visual feedback 610, a second visual feedback 620, and a third visual feedback 630, the processor 140 may repeat a sequential display of the first visual feedback 610, the second visual feedback 620, and the third visual feedback 630.

A visual feedback may include a graphical user interface (GUI) that moves a preset shape in a preset color. However, the exemplary embodiments are not limited thereto, and the processor 140 may check a display state of a periphery of an area, which will provide a visual feedback, to set a color of the visual feedback. For example, if the periphery of the area that will provide the visual feedback is displayed in a dark color, the processor 140 may set the color of the visual feedback to a bright color.

FIG. 6 illustrates three types of visual feedbacks, i.e., the first visual feedback 610, the second visual feedback 620, and the third visual feedback 630. However, this is only for convenience of description, and a visual feedback may have a shape that consecutively moves from a right side to a left side.

As described with reference to FIG. 6, a visual feedback is provided from a second edge area which is adjacent to a rotation direction but is not limited thereto. For example, the processor 140 may provide a visual feedback that is generated from a right edge area and ends in a left edge area after moving through upper and lower edge areas.

Alternatively, the processor 140 may provide a visual feedback that moves from one of a plurality of edge areas adjacent to a rotation direction to an edge area where the object 10 is located.

Further, as described with reference to FIG. 6, a visual feedback is provided in an edge area but is not limited thereto. For example, the processor 140 may set a circular area on the display 110 so as to provide a visual feedback that moves from an opposite direction to a rotation direction of the display 110 to the rotation direction.

Alternatively, the processor 140 may control a visual feedback to be displayed and flicker only in a left edge area, as shown in the bottom drawing of FIG. 6.

In addition, the processor 140 may provide a dynamic visual feedback, as opposed to a static visual feedback. For example, if the display 110 rotates in a leftward direction, the processor 160 may provide a visual feedback only in the left edge area as shown in the bottom drawing of FIG. 6.

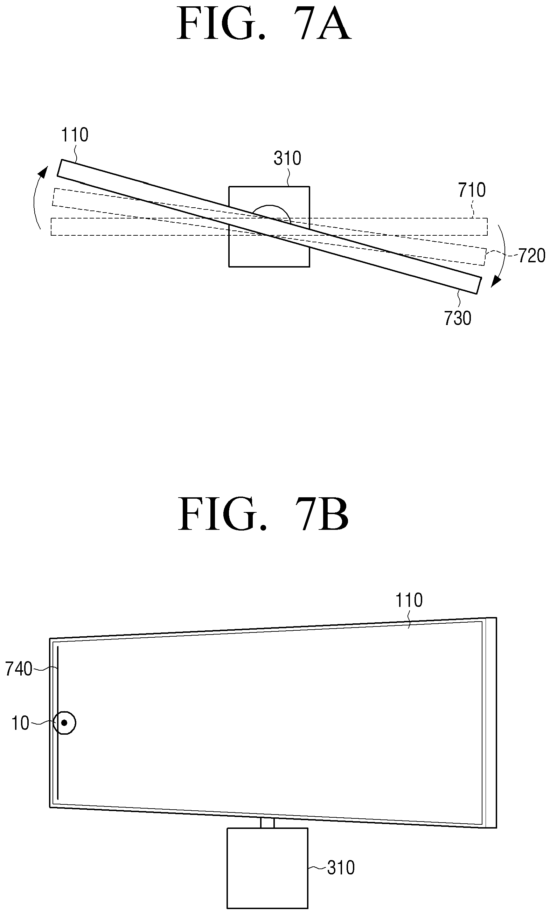

FIGS. 7A and 7B illustrate a rotation limit point of the display 110 and an operation performed according to the rotation limit point of the display 110, according to an exemplary embodiment.

As shown in FIG. 7A, there may be a limit point at a rotation of the display 110. Although the object 10 is located in a left edge area, and thus the display 110 rotates in a leftward (i.e., clockwise) direction, the processor 140 controls the rotation of the display 110 such that the rotation proceeds from a first location 710 to a third location 730 via a second location 720 and then stops at the third location 730. If the display 110 is located at the third location 730, the processor 140 may control a current so that no current flows in the motor unit 120.

The processor 140 may also control the motor unit 120 to change a rotation speed based on a location of the display 110. For example, the processor 140 may control the rotation speed to gradually increase when the display 110 rotates from the first location 710 to the second location 720. Further, the processor 140 may control the rotation speed to gradually decrease when the display 110 rotates from the second location 720 to the third location 730.

FIG. 7A illustrates a limit point if the display 110 rotates in leftward and rightward directions. However, if the display 110 rotates in upward and downward directions, there may be a limit point. An operation of rotating the display 110 in upward and downward directions is similar to an operation of rotating the display 110 in leftward and rightward directions and thus is omitted.

FIG. 7B illustrates a visual feedback if the display 110 is located at a limit point. If a rotation of the display 110 is completed, the processor 140 may provide a visual feedback that indicates an impossibility of continuing the rotation of the display 110 in an edge area.

For example, if the display 110 reaches a limit point, the processor 140 may modify an elliptical shape of the object 10 into a circular shape and display the object 10 in the circular shape while the display 110 rotates. The processor 140 may also changes a dynamic visual feedback displayed in an edge area into a static visual feedback 740 and displays the static visual feedback 740.

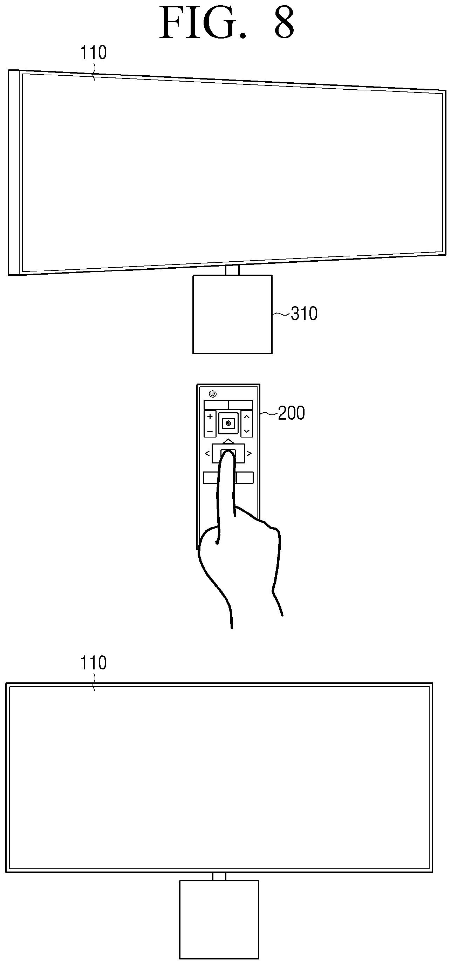

FIG. 8 illustrates an operation of rotating a display to a default location, according to an exemplary embodiment.

Referring to FIG. 8, if a preset control signal is received from the input device 200, the processor 140 may rotate the display 110 to a preset default location. For example, if a preset button of the input device 200 is pressed by a user, the processor 140 may receive a signal that corresponds to the preset button so as to cause the display 110 to rotate to the preset default location.

The preset default location may be a state where the display 110 does not rotate based on a support unit. The preset default location may be set by a manufacturer or a user.

If the display 110 rotates to the default location, the processor 140 may provide a visual feedback that corresponds to the default location. For example, if the display 110 rotates to the default location, the processor 140 may provide a visual feedback in all areas. Alternatively, the processor 140 may provide a visual feedback in one edge area.

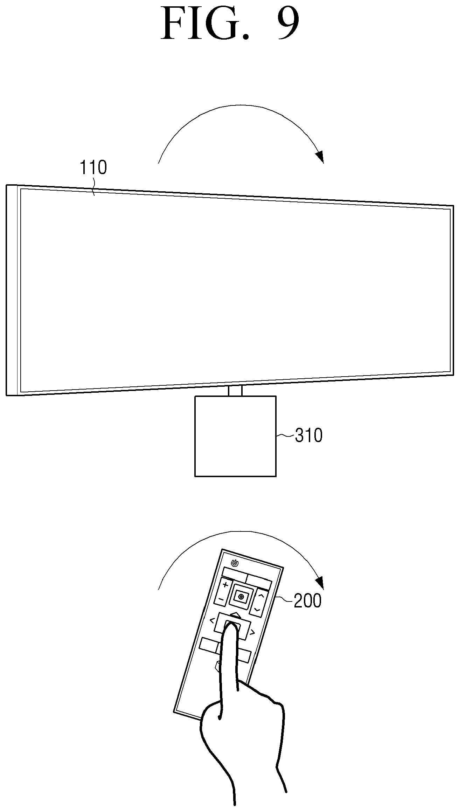

FIG. 9 illustrates a method for rotating the display 110, according to another exemplary embodiment.

As shown in FIG. 9, the processor 140 may cause the display 110 to rotate regardless of a location of the object 10. For example, when a preset button of the input device 200 is pressed by a user, the input device 200 may consecutively generate a control command according to a movement state of the input device 200 and transmit the control command to the display apparatus 100. The display apparatus 100 may receive the control command to rotate the display 110 so as to enable an orientation of the display 110 to correspond to the consecutive control command.

The input device 200 may sense a movement state of the input device 200 to generate a control command from when the preset button is manipulated to be pressed.

However, the input device 200 is not limited thereto and thus may sense a movement state of the input device 200 in order to generate a control command without the user manipulation of pressing the preset button. The display apparatus 100 may rotate the display 110 so as to enable the display 110 to correspond to a control command.

Alternatively, when the preset button of the input device 200 is pressed, the input device 200 may consecutively generate a control command based on a distance between the input device 200 and the display apparatus 100 and transmit the control command to the display apparatus 100. The display apparatus 100 may receive the control command to rotate the display 110 so as to enable an orientation of the display 110 to correspond to the consecutive control command.

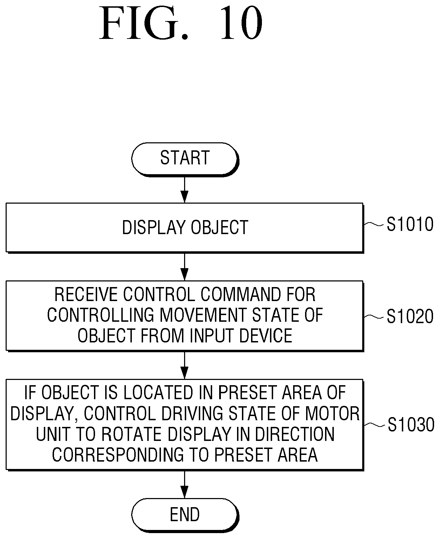

FIG. 10 is a flowchart of a method for controlling a display apparatus, according to an exemplary embodiment.

In operation S1010, an object is displayed. In operation S1020, a control command for controlling a movement state of the object is received from an input device. If the object is located in a preset area of the display, a driving state of a motor unit is controlled so as to cause the display to rotate in a direction that corresponds to the preset area in operation S1030.

In particular, in operation S1030, if the object is located in an edge area of the display, the rotation of the display may be controlled so as to cause the edge area to rotate in a back side direction of the display apparatus.

Alternatively, in operation S1030, if the object is located in an edge area of the display, the rotation of the display may be controlled so as to cause the edge area to rotate in a front side direction of the display apparatus.

In operation S1030, if the object is located in an area located at a distance which is greater than or equal to a preset first distance and shorter than a preset second distance from an edge area of the display, a driving of the motor unit may be initialized. If the object is located in an area located which is shorter than the first distance and located outside an edge area, the display may be controlled to rotate at a speed which is slower than a preset speed. If the object is located in an edge area, the display may be controlled to rotate at the preset speed.

Further, if the object is located in an edge area of the display, and thus the display rotates in a direction that corresponds to the edge area, a shape of the object may be modified so as to provide a visual feedback associated with a rotation.

In particular, the visual feedback associated with the rotation may be a visual feedback that relates to performing a pulling or pushing interaction in an edge area.

Further, if the object is located in a first edge area of the display, and thus the display rotates in a direction that corresponds to the first edge area, there may be provided a visual feedback that indicates a rotation direction of the display in the first edge area and in a second edge area that is adjacent to the first edge area. If the rotation of the display is completed, a visual feedback that indicates an impossibility of continuing the rotation of the display may be provided in the first edge area.

If a preset control signal is received from the input device, the display may rotate to a preset default location.

Further, in operation S1030, if a signal is received according to a manipulation of pressing a preset button of the input device and a signal that corresponds to a motion of the input device is received, the object may be moved so as to correspond to the motion of the input device.

The motor unit may include at least one selected from among a first motor that swivels the display in leftward and rightward directions and a second motor that tilts the display in upward and downward directions.

According to various exemplary embodiments as described above, a display apparatus may provide a user interaction that enables a user to feel as if the user directly pulls or pushes an area within which an object is located, so as to rotate a display.

As described in one or more of the exemplary embodiments, a display rotates according to a location of an object but is not limited thereto. For example, the display may rotate by using four direction buttons of an input device.

Alternatively, the input device may not be used. For example, the display apparatus may recognize a finger of the user and move the object to enable the object to correspond to a motion of the finger of the user so as to rotate the display, or may rotate the display to enable the display to the motion of the finger of the user.

A method for controlling a display apparatus according to various exemplary embodiments as described above may be embodied as a computer-executable program code and then provided to each server or devices so as to be executed by a processor when being stored on various types of non-transitory computer readable media.

For example, there may be provided a non-transitory computer readable medium that stores a program for executing a process of sequentially performing displaying an object, receiving a control command for controlling a movement state of the object from an input device, and if the object is located in a preset area of a display, controlling a driving state of a motor unit so as to cause the display to rotate in a direction that corresponds to the preset area.

The non-transitory computer readable medium is a medium which does not store data temporarily such as a register, cache, and memory but stores data semi-permanently and is readable by devices. More specifically, the aforementioned applications or programs may be stored in the non-transitory computer readable media, such as compact disks (CDs), digital video disks (DVDs), hard disks, Blu-ray disks, universal serial buses (USBs), memory cards, and read-only memory (ROM).

The foregoing exemplary embodiments and advantages are merely exemplary and are not to be construed as limiting the present inventive concept. The present teaching can be readily applied to other types of apparatuses. In addition, the description of the exemplary embodiments is intended to be illustrative, and not to limit the scope of the claims, and many alternatives, modifications, and variations will be apparent to persons having ordinary skill in the art.

## Claims

1. A display apparatus (100) comprising:
a display (110) configured to display a pointing object (10);
a motor unit (120) configured to rotate the display; and
a communicator (130) configured to communicate with an input device (200) that controls a movement of a pointing object displayed on the display; and
a processor (140) configured to, in response to the object being in an edge area of the display, control the motor unit to cause the display to rotate in a direction that corresponds to the edge area of the display, and control the display to provide a first visual feedback that indicates the display is rotating, wherein the visual feedback is modifying a shape of the pointing object,
wherein the processor (140) initializes driving of the motor unit (120) in response to the pointing object (10) being located in an area located at a distance greater than or equal to a preset first distance and shorter than a preset second distance from the edge area of the display (110).

2. The display apparatus (100) of claim 1, wherein in response to the object (10) being located in the edge area of the display (110), the processor (140) controls to cause the display to rotate such that the edge area rotates in a back side direction of the display apparatus.

3. The display apparatus (100) of claim 1 or 2, wherein in response to the object (10) being located in the edge area of the display (110), the processor (140) controls to cause the display to rotate such that the edge area rotates in a front side direction of the display apparatus.

4. The display apparatus (100) of any preceding claim, wherein the visual feedback associated with the rotation is a visual feedback that relates to performing a pulling or pushing interaction in the edge area.

5. The display apparatus (100) of any one of claims 1 through 4, wherein the processor (140) provides a first visual feedback (610) indicating a rotation direction of the display (110) in a first edge area and in a second edge area adjacent to the first edge area in response to the display rotating a direction that corresponds to the edge area in response to the object (10) being located in the edge area of the display, and provides a second visual feedback (620) indicating an impossibility of the rotating of the display in the edge area in response to a complete rotation of the display.

6. The display apparatus (100) of any one of claims 1 through 5, wherein in response to a preset control signal being received from the input device (200), the processor (140) causes the display (110) to rotate to a preset default location.

7. The display apparatus (100) of any one of claims 1 through 6, wherein in response to a signal being received according to a pressing of a preset button of the input device (200) and a signal that corresponds to a motion of the input device being received, the processor (140) moves the object (10) in correspondence with the motion of the input device.

8. The display apparatus (100) of any one of claims 1 through 7, wherein the motor unit (120) comprises at least one selected from a first motor configured to swivel the display (110) in leftward and rightward directions and a second motor configured to tilt the display in upward and downward directions.

9. A method of controlling a display apparatus (100), the method comprising:
displaying a pointing object (10) on a display (110) ; and
receiving a control command for controlling a movement of the pointing object from an input device (200); and
in response to the object being located in an edge area of the display (110), controlling a motor unit (120) to cause the display to rotate in a direction that corresponds to the edge area of the display, controlling the display to provide a first visual feedback that indicates that the display is rotating, wherein the visual feedback comprises modifying a shape of the pointing object, and initializing driving of the motor unit (120) in response to the pointing object (10) being located in an area located at a distance greater than or equal to a preset first distance and shorter than a preset second distance from the edge area of the display (110).

10. The method of claim 9, wherein the controlling comprises controlling a rotation of the display (110) by causing the edge area of the display to rotate in a back side direction of the display apparatus (100) in response to the object (10) being located in the edge area of the display.

11. The method of claim 9 or 10, wherein the controlling comprises controlling a rotation of the display (110) by causing the edge area of the display to rotate in a front side direction of the display apparatus (100) in response to the object being located in the edge area of the display.

## Patentansprüche

1. Anzeigevorrichtung (100), umfassend:
Anzeige (110), die dafür ausgelegt ist, ein Zeigeobjekt (10) anzuzeigen;
Motoreinheit (120), die dafür ausgelegt ist, die Anzeige zu drehen; und
Kommunikationseinheit (130), die dafür ausgelegt ist, mit einer Eingabevorrichtung (200) zu kommunizieren, die eine Bewegung eines auf der Anzeige angezeigten Zeigeobjekts steuert; und
Prozessor (140), der dafür ausgelegt ist, als Reaktion darauf, dass sich das Objekt in einem Randbereich der Anzeige befindet, die Motoreinheit zu steuern, um die Anzeige in eine Richtung drehen zu lassen, die dem Randbereich der Anzeige entspricht, und die Anzeige zu steuern, um eine erste visuelle Rückmeldung bereitzustellen, die anzeigt, dass sich die Anzeige dreht, wobei die visuelle Rückmeldung eine Form des Zeigeobjekts modifiziert,
wobei der Prozessor (140) das Antreiben der Motoreinheit (120) als Reaktion darauf einleitet, dass sich das Zeigeobjekt (10) in einem Bereich befindet, der sich in einem Abstand befindet, der größer oder gleich einem voreingestellten ersten Abstand und kürzer als ein voreingestellter zweiter Abstand vom Randbereich der Anzeige (110) ist.

2. Anzeigevorrichtung (100) nach Anspruch 1, wobei als Reaktion darauf, dass sich das Objekt (10) im Randbereich der Anzeige (110) befindet, der Prozessor (140) durch Steuerung die Anzeige zum Drehen veranlasst, und zwar derart, dass sich der Randbereich in einer Richtung der Hinterseite der Anzeigevorrichtung dreht.

3. Anzeigevorrichtung (100) nach Anspruch 1 oder 2, wobei als Reaktion darauf, dass sich das Objekt (10) im Randbereich der Anzeige (110) befindet, der Prozessor (140) durch Steuerung die Anzeige zum Drehen veranlasst, und zwar derart, dass sich der Randbereich in einer Richtung der Vorderseite der Anzeigevorrichtung dreht.

4. Anzeigevorrichtung (100) nach einem der vorhergehenden Ansprüche, wobei die der Drehung zugeordnete visuelle Rückmeldung eine visuelle Rückmeldung ist, die sich auf das Durchführen einer ziehenden oder schiebenden Interaktion im Randbereich bezieht.

5. Anzeigevorrichtung (100) nach einem der Ansprüche 1 bis 4, wobei der Prozessor (140) eine erste visuelle Rückmeldung (610) bereitstellt, die eine Drehrichtung der Anzeige (110) in einem ersten Randbereich und in einem zweiten Randbereich angrenzend an den ersten Randbereich als Reaktion auf das Drehen der Anzeige in eine Richtung anzeigt, die dem Randbereich entspricht, als Reaktion darauf, dass sich das Objekt (10) im Randbereich der Anzeige befindet, und eine zweite visuelle Rückmeldung (620) bereitstellt, die eine Unmöglichkeit der Drehung der Anzeige im Randbereich als Reaktion auf eine vollständige Drehung der Anzeige anzeigt.

6. Anzeigevorrichtung (100) nach einem der Ansprüche 1 bis 5, wobei der Prozessor (140) als Reaktion auf ein voreingestelltes Steuersignal, das von der Eingabevorrichtung (200) empfangen wird, bewirkt, dass sich die Anzeige (110) zu einer voreingestellten Standardposition dreht.

7. Anzeigevorrichtung (100) nach einem der Ansprüche 1 bis 6, wobei der Prozessor (140) als Reaktion darauf, dass ein Signal gemäß einem Drücken einer voreingestellten Taste der Eingabevorrichtung (200) empfangen wird, und ein Signal, das einer Bewegung der empfangenden Eingabevorrichtung entspricht, empfangen wird, das Objekt (10) entsprechend der Bewegung der Eingabevorrichtung bewegt.

8. Anzeigevorrichtung (100) nach einem der Ansprüche 1 bis 7, wobei die Motoreinheit (120) mindestens eines ausgewählt aus einem ersten Motor, der dafür ausgelegt ist, die Anzeige (110) nach links und rechts zu schwenken, und einem zweiten Motor, der dafür ausgelegt ist, die Anzeige nach oben und unten zu neigen, umfasst.

9. Verfahren zum Steuern einer Anzeigevorrichtung (100), wobei das Verfahren umfasst:
Anzeigen eines Zeigeobjekts (10) auf einer Anzeige (110); und
Empfangen eines Steuerbefehls von einer Eingabevorrichtung (200) zum Steuern einer Bewegung des Zeigeobjekts; und
als Reaktion darauf, dass sich das Objekt in einem Randbereich der Anzeige (110) befindet, Steuern einer Motoreinheit (120) zum Veranlassen, dass sich die Anzeige in eine Richtung dreht, die dem Randbereich der Anzeige entspricht, Steuern der Anzeige zum Bereitstellen einer ersten visuellen Rückmeldung, die anzeigt, dass sich die Anzeige dreht, wobei die visuelle Rückmeldung das Modifizieren einer Form des Zeigeobjekts und das Einleiten des Antreibens der Motoreinheit (120) als Reaktion darauf umfasst, dass sich das Zeigeobjekt (10) in einem Bereich befindet, der sich in einem Abstand befindet, der größer oder gleich einem voreingestellten ersten Abstand und kürzer als ein voreingestellter zweiter Abstand vom Randbereich der Anzeige (110) ist.

10. Verfahren nach Anspruch 9, wobei das Steuern das Steuern einer Drehung der Anzeige (110) umfasst, indem veranlasst wird, den Randbereich der Anzeige in einer Richtung der Hinterseite der Anzeigevorrichtung (100) als Reaktion darauf, dass sich das Objekt (10) im Randbereich der Anzeige befindet, zu drehen.

11. Verfahren nach Anspruch 9 oder 10, wobei das Steuern das Steuern einer Drehung der Anzeige (110) umfasst, indem veranlasst wird, den Randbereich der Anzeige in einer Richtung der Vorderseite der Anzeigevorrichtung (100) als Reaktion darauf, dass sich das Objekt im Randbereich der Anzeige befindet, zu drehen.

## Revendications

1. Appareil d'affichage (100), comprenant :
un écran (110), configuré pour afficher un objet de pointage (10) ;
une unité motrice (120), configurée pour faire pivoter l'écran ; et
une unité de communication (130), configurée pour communiquer avec un dispositif d'entrée (200) qui contrôle un déplacement d'un objet de pointage affiché sur l'écran ; et
un processeur (140), configuré pour, en réponse au fait que l'objet se trouve dans une zone périphérique de l'écran, commander l'unité motrice pour amener l'écran à pivoter dans une direction qui correspond à la zone périphérique de l'écran, et commander l'écran pour fournir un premier retour visuel qui indique que l'écran est en train de pivoter, le retour visuel modifiant une forme de l'objet de pointage,
le processeur (140) initialisant l'entraînement de l'unité motrice (120) en réponse au fait que l'objet de pointage (10) se trouve dans une zone située à une distance supérieure ou égale à une première distance prédéfinie et inférieure à une seconde distance prédéfinie de la zone périphérique de l'écran (110).

2. Appareil d'affichage (100) selon la revendication 1, dans lequel, en réponse au fait que l'objet (10) se trouve dans la zone périphérique de l'écran (110), le processeur (140) émet une commande pour amener l'écran à pivoter de sorte que la zone périphérique pivote vers l'arrière par rapport à l'appareil d'affichage.

3. Appareil d'affichage (100) selon la revendication 1 ou 2, dans lequel, en réponse au fait que l'objet (10) se trouve dans la zone périphérique de l'écran (110), le processeur (140) émet une commande pour amener l'écran à pivoter de sorte que la zone périphérique pivote vers l'avant par rapport à l'appareil d'affichage.

4. Appareil d'affichage (100) selon l'une quelconque des revendications précédentes, dans lequel le retour visuel associé à la rotation est un retour visuel qui se rapporte à la réalisation d'une interaction de tirage ou de poussée dans la zone périphérique.

5. Appareil d'affichage (100) selon l'une quelconque des revendications 1 à 4, dans lequel le processeur (140) fournit un premier retour visuel (610) indiquant un sens de pivotement de l'écran (110) dans une première zone périphérique et dans une seconde zone périphérique adjacente à la première zone périphérique en réponse à la rotation de l'écran dans un sens correspondant à la zone périphérique en réponse au fait que l'objet (10) se trouve dans la zone périphérique de l'écran, et fournit un second retour visuel (620) indiquant une impossibilité de la rotation de l'écran dans la zone périphérique en réponse à un pivotement complet de l'écran.

6. Appareil d'affichage (100) selon l'une quelconque des revendications 1 à 5, dans lequel, en réponse à la réception d'un signal de commande prédéfini en provenance du dispositif d'entrée (200), le processeur (140) amène l'écran (110) à pivoter dans un emplacement par défaut prédéfini.

7. Appareil d'affichage (100) selon l'une quelconque des revendications 1 à 6, dans lequel, en réponse à la réception d'un signal selon une pression sur un bouton prédéfini du dispositif d'entrée (200) et à la réception d'un signal correspondant à un déplacement du dispositif d'entrée, le processeur (140) déplace l'objet (10) selon le déplacement du dispositif d'entrée.

8. Appareil d'affichage (100) selon l'une quelconque des revendications 1 à 7, dans lequel l'unité motrice (120) comprend au moins un moteur sélectionné parmi un premier moteur configuré pour faire pivoter l'écran (110) vers la gauche et vers la droite et un second moteur configuré pour incliner l'écran vers le haut et vers le bas.

9. Procédé de commande d'un appareil d'affichage (100), le procédé consistant à :
afficher un objet de pointage (10) sur un écran (110) ; et
recevoir en provenance d'un dispositif d'entrée (200) une instruction de commande pour commander un déplacement de l'objet de pointage ; et
en réponse au fait que l'objet se trouve dans une zone périphérique de l'écran (110), commander une unité motrice (120) pour amener l'écran à pivoter dans une direction qui correspond à la zone périphérique de l'écran, commander l'écran pour fournir un premier retour visuel qui indique que l'écran est en train de pivoter, le retour visuel comprenant une modification d'une forme de l'objet de pointage, et initialiser l'entraînement de l'unité motrice (120) en réponse au fait que l'objet de pointage (10) se trouve dans une zone située à une distance supérieure ou égale à une première distance prédéfinie et inférieure à une seconde distance prédéfinie de la zone périphérique de l'écran (110).

10. Procédé selon la revendication 9, dans lequel la commande comprend une commande d'une rotation de l'écran (110) en amenant la zone périphérique de l'écran à pivoter vers l'arrière de l'appareil d'affichage (100) en réponse au fait que l'objet (10) se trouve dans la zone périphérique de l'écran.

11. Procédé selon la revendication 9 ou 10, dans lequel la commande comprend une commande d'une rotation de l'écran (110) en amenant la zone périphérique de l'écran à pivoter vers l'avant de l'appareil d'affichage (100) en réponse au fait que l'objet se trouve dans la zone périphérique de l'écran.
